# FASCICULE DE BREVET EUROPEEN

(11) **EP 3 429 378 B1**
(45) Date de publication et mention de la délivrance du brevet: **16.02.2022**
(21) Numéro de dépôt: 17715232.9
(22) Date de dépôt: 14.03.2017
(51) Int. Cl.: A23N 1/00, A47J 19/02, B30B 5/02, B30B 9/22

(54) **PRESSE-AGRUMES A MEMBRANE**
MEMBRANZITRUSPRESSE
MEMBRANE CITRUS PRESS

(30) Priorité: 14.03.2016 FR 1652107
(43) Date de publication de la demande: 23.01.2019
(73) Titulaire: SARL JNIUS, 59280 Armentieres (FR)
(72) Inventeur: TOUBEAUX, Jean François, 59134 Le Maisnil (FR)
(74) Mandataire: Cabinet Beau de Loménie
(86) Numéro de dépôt international: PCT/FR2017/050576
(87) Numéro de publication internationale: WO 2017/158278

(56) Documents cités:
- DE-A1- 19 641 919
- FR-A1- 2 623 060
- GB-A- 2 158 697
- US-A- 2 274 306
- US-A- 2 414 053
- US-A- 2 420 680
- US-A- 2 848 939
- US-A- 5 075 122

## Description

### Arrière-plan de l'invention

La présente invention a pour objet un presse-agrumes. Elle trouve en particulier une application pour la préparation de jus, à partir de fruits ou de légumes, par exemple dans un établissement de restauration ou dans un cadre privé.

On connaît des presse-agrumes manuels comportant une portion tronconique contre laquelle une portion de fruit peut être pressée, pour en extraire le jus.

De tels dispositifs nécessitent cependant des efforts importants de la part de l'utilisateur, et sont en outre salissants, du fait, en particulier, des projections de jus ; de ce fait, leur utilisation requiert également beaucoup de temps de la part de l'utilisateur, tant pour les opérations préalables à leur utilisation, telles que la découpe des fruits, que pour les opérations postérieures, telles que le nettoyage du dispositif et de l'environnement sur lequel il a été utilisé.

On connaît également des presse-agrumes partiellement automatiques, permettant de limiter les efforts requis de la part de l'utilisateur.

Un tel presse-agrumes est en particulier proposé par le document WO 2009/044103, qui décrit un presse-agrumes comprenant :
- une enceinte ayant une paroi délimitant une cavité d'un fruit, et une ouverture formée dans la paroi pour l'introduction du fruit dans la cavité ; et
- une canule s'étendant de part et d'autre de la paroi de l'enceinte, la canule ayant une première partie disposée dans la cavité configurée pour être engagée dans le fruit, et une seconde partie disposée en dehors de la cavité, la canule comportant en outre une ouverture traversante s'étendant entre les première et seconde parties.

La paroi comporte un plancher configuré pour être rapproché d'un plafond de part et d'autre duquel s'étend la canule. Après qu'un fruit a été placé dans la cavité, le plancher est rapproché du plafond alors que la canule est déplacée verticalement vers le bas, de manière que le fruit est emmanché sur la première partie de la canule pour en extraire le jus.

Un tel dispositif, s'il limite les efforts déployés par l'utilisateur, ne permet pas d'extraire la totalité du jus contenu dans le fruit. En outre, il est particulièrement complexe à fabriquer, en particulier du fait des déplacements synchronisés du plancher et de la canule au travers du plafond, de sorte qu'il n'est pas complètement satisfaisant.

Le document US 2 848 939 décrit un presse-agrumes qui comporte deux membranes gonflables externes entourant le fruit à presser ainsi qu'une membrane gonflable interne configurée pour se déployer à l'intérieur du fruit. Ce presse-agrumes présente une structure très complexe qui nécessite trois entrées d'air comprimé. En outre, l'éjection du fruit pressé est peu efficace en raison de la présence d'une membrane à l'intérieur du fruit. Enfin, le fait que le jus et la pulpe soit en contact avec la membrane pose des problèmes de compatibilité alimentaire.

### Objet et résumé de l'invention

La présente invention a pour but de résoudre, parmi d'autres, les insuffisances décrites plus haut des presse-agrumes connus de l'art antérieur, en proposant un presse-agrumes permettant d'extraire facilement, rapidement et efficacement, le fluide contenu dans un produit à presser.

Ce but est atteint par le fait que l'invention porte sur un presse-agrumes selon la revendication 1 et comportant une cavité d'un produit à presser contenant un fluide, le presse-agrumes comportant en outre :
- une membrane extensible disposée dans la cavité et s'étendant sur tout ou partie de la paroi de manière à entourer le produit à presser disposé dans la cavité, et
- des moyens de gonflage configurés pour gonfler la membrane extensible, en sorte de comprimer le produit à presser emmanché sur la première partie de la canule pour en extraire le fluide hors de la cavité par la conduite interne de la canule ;
- un couvercle conformé pour obturer l'ouverture, de manière à fermer la cavité, le couvercle étant mobile entre une position ouverte dans laquelle l'enceinte est ouverte, et une position fermée dans laquelle l'ouverture est obturée par le couvercle ; et
- un dispositif d'éjection pour évacuer le produit pressé hors de la cavité.

La présence de la membrane extensible permet ainsi de comprimer de manière simple et efficace le produit à presser, pour en extraire le fluide hors de la cavité. Les moyens de gonflage sont en particulier configurés pour adapter le volume de la membrane extensible aux dimensions et à la résistance du produit à presser, tout en permettant d'exercer une pression efficace et maîtrisée sur le produit à presser. En particulier, le volume de la membrane extensible peut être adapté de manière à ne pas déchirer la surface extérieure du produit à presser, telle que le zeste, dans le cas d'une orange, une telle déchirure risquant de modifier le goût du fluide qui en est extrait au travers de la canule.

En outre, le fluide étant directement extrait hors de la cavité, le volume intérieur de la cavité n'est pas souillé par le fluide, ce qui réduit considérablement la nécessité des opérations de nettoyage.

La paroi de l'enceinte ne comportant pas de portions mobiles les unes par rapport aux autres, au contraire des presse-agrumes connus de l'art antérieur, la fabrication du presse-agrumes est simplifiée, son coût réduit et sa maintenance facilitée. En outre, son encombrement est limité, par rapport aux presse-agrumes partiellement automatiques connus de l'art antérieur, tels que celui évoqué précédemment, de sorte qu'il est particulièrement adapté à un usage domestique.

La canule est par ailleurs munie d'un ou plusieurs orifices permettant au fluide du produit à presser de s'écouler dans la conduite interne.

La présence du couvercle permet de maintenir efficacement et solidement le produit à presser dans la cavité, pour faciliter l'extraction de son fluide hors de la cavité. En contribuant à la compression du produit à presser, le couvercle participe également à l'efficacité de l'extraction de son fluide.

En outre, le couvercle permet de limiter les éventuelles projections qui pourraient souiller l'environnement sur lequel est disposé le presse-agrumes selon la présente invention.

De façon avantageuse, le couvercle a également pour fonction de pousser le produit à presser afin qu'il s'emmanche sur la canule. On comprend que cette poussée a lieu lorsque le couvercle passe de sa position ouverte à sa position fermée.

Avantageusement, le presse-agrumes comporte un dispositif motorisé pour déplacer le couvercle entre sa position ouverte et sa position fermée, afin de faciliter l'introduction du produit à presser dans l'enceinte.

Par ailleurs, l'intérêt du dispositif d'éjection est de faciliter le retrait du produit pressé après extraction du fluide.

Le dispositif d'éjection est préférentiellement motorisé.

Le presse-agrume comporte par ailleurs des moyens de commande pour commander le déplacement du couvercle et du dispositif d'éjection.

Avantageusement, la paroi comporte une cloison périphérique et un fond, la canule s'étendant de part et d'autre du fond.

Par cette disposition, l'extraction du fluide hors du produit à presser est facilitée par la gravitation. En outre, la conception du presse-agrumes selon la présente invention est encore simplifiée.

On pourrait concevoir la présence, sur la surface interne du couvercle, c'est-à-dire sur la surface du couvercle dirigée vers la cavité lorsque le couvercle couvre l'ouverture, d'un moyen de calage configuré pour coopérer avec le produit à presser de manière à le maintenir dans la cavité, en particulier lorsque la membrane extensible est gonflée.

Ledit moyen de calage présente, par exemple et de manière non limitative, une forme configurée pour coopérer avec la forme du produit à presser.

De préférence, la cavité est de forme sensiblement cylindrique. Selon une autre variante, la cavité a une forme sensiblement sphérique.

La forme de la cavité est ainsi particulièrement adaptée à des produits à presser de forme sphérique ou cylindrique, tels que des oranges, des citrons, des pamplemousses, ou tout autre fruit ou légume.

Avantageusement, la canule présente une direction longitudinale et le couvercle est mobile selon la direction longitudinale de la canule. Cette direction longitudinale est parallèle à l'axe de l'enceinte lorsque cette dernière est cylindrique.

Avantageusement, la membrane extensible comporte un corps de forme sensiblement cylindrique configuré pour entourer le produit à presser disposé dans la cavité.

La forme du corps de la membrane extensible est également particulièrement adaptée à des produits à presser de forme cylindrique ou sphérique, et contribue à la facilité et à l'efficacité de l'extraction de leur fluide.

De manière avantageuse, la membrane extensible présente, lorsqu'elle est gonflée, une section non constante, conformée pour épouser la forme du produit à presser.

La membrane extensible, en épousant précisément la forme du produit à presser, permet d'en extraire efficacement le fluide, sans le dégrader, et en particulier sans risquer de perforer sa peau.

De préférence, la paroi comporte une cloison périphérique, la membrane extensible comportant une portion gonflable s'étendant sur tout ou partie de la cloison périphérique.

La présence de la portion gonflable contribue à l'efficacité de la compression du produit à presser, et, par suite, à l'efficacité de l'extraction de son fluide. En outre, en étant disposée sur tout ou partie de la cloison périphérique, elle ne compromet ni la coopération du produit avec la canule s'étendant, par exemple et de manière non limitative, à partir du fond de la paroi, ni l'introduction du produit à presser par l'ouverture formée dans la paroi.

Selon un mode de réalisation optionnel, la membrane extensible comporte au moins deux portions gonflables configurées pour s'étendre sur deux portions distinctes de la cloison périphérique de la paroi.

La présence de deux portions distinctes améliore encore la conformation de la membrane extensible aux dimensions du produit à presser. En outre, dans l'hypothèse où les deux portions ne communiquent pas fluidiquement l'une avec l'autre, et dans l'éventualité où l'une des deux portions serait défaillante, par exemple suite à une perforation, le fonctionnement du presse-agrumes selon la présente invention ne serait pas compromis.

De manière avantageuse, le presse-agrumes comporte en outre des moyens d'admission d'un fluide tel que de l'eau pour introduire ledit fluide dans la cavité.

L'introduction d'un fluide tel que de l'eau dans la cavité permet de faciliter les opérations de nettoyage, à la suite de l'utilisation du presse-agrumes.

Selon un mode de réalisation optionnel, le même fluide est utilisé pour, dans un premier temps, gonfler la membrane extensible de manière à extraire le fluide contenu dans le produit à presser, et pour, dans un second temps, participer au nettoyage de la cavité. Par cette disposition, l'impact environnemental du presse-agrumes selon la présente invention est significativement réduit, de même que son coût de fonctionnement.

Avantageusement, le presse-agrumes comporte en outre un dispositif émetteur d'ultra-sons configuré pour émettre des ultra-sons dans le fluide contenu dans la cavité, de manière à nettoyer ladite cavité.

La présence du dispositif permet encore d'améliorer et de faciliter les opérations de nettoyage du presse-agrumes, et plus particulièrement de la cavité.

L'utilisation des moyens d'admission d'un fluide dans la cavité, éventuellement combinés avec le dispositif émetteur d'ultra-sons, rend ainsi le presse-agrumes particulièrement adapté à un usage commercial ou dans le cadre d'une collectivité, où les contraintes sanitaires sont particulièrement strictes.

De manière avantageuse, la canule présente un axe longitudinal, le presse-agrumes comportant en outre des moyens de rotation configurés pour faire pivoter la canule autour de son axe longitudinal.

La mise en rotation de la canule autour de son axe longitudinal contribue encore à la facilité et à l'efficacité de l'extraction de son fluide hors du produit à presser. Dans le cas de l'extraction d'un jus de fruit, elle permet de faciliter l'introduction de la première partie de la canule dans la chair du fruit et de pré-broyer la chair, de manière à faciliter l'extraction de son jus.

De préférence, la première partie de la canule comporte une surface extérieure, la canule comportant en outre une saillie s'étendant sur la surface extérieure de la première partie.

Selon un mode de réalisation préférentiel, la saillie présente une forme sensiblement hélicoïdale.

La présence de la saillie et sa forme contribuent là encore à la facilité et à l'efficacité de l'extraction de son fluide hors du fruit à presser.

Selon l'invention, le dispositif d'éjection comporte une base mobile qui est déplaçable selon l'axe longitudinal de la canule. L'axe longitudinal de la canule est préférentiellement parallèle à l'axe de l'enceinte lorsque cette dernière est cylindrique.

De préférence, la base mobile comporte un plateau annulaire agencé pour entourer la canule. On comprend que le plateau comporte un trou central qui est traversé par la canule lorsque le plateau est déplacé selon l'axe longitudinal de la canule. Un intérêt est de pouvoir pousser efficacement le produit pressé vers l'ouverture de l'enceinte afin de l'évacuer hors de l'enceinte.

Avantageusement, le presse-agrumes selon l'invention comporte en outre un dispositif de déplacement pour déplacer ensemble le couvercle avec la base mobile du dispositif d'éjection selon une direction parallèle à l'axe longitudinal de la canule.

Un intérêt est d'automatiser la sortie du produit pressé hors de la cavité, l'ouverture du couvercle s'accompagnant du déplacement de la base mobile. Qui plus est, cette conformation permet d'automatiser l'introduction du produit à presser dans l'enceinte et sa fermeture. Pour ce faire, la fermeture du couvercle s'accompagnant du déplacement de la base mobile vers le fond du cylindre.

On comprend donc que le dispositif d'éjection est disposé entre le fond de l'enceinte et le couvercle.

Avantageusement, le dispositif de déplacement est configuré de sorte que la base mobile est disposée au fond de la cavité lorsque le couvercle est en position fermée, tandis que la base mobile est disposée au niveau ou au-dessus de l'ouverture lorsque le couvercle est en position ouverte.

Avantageusement, le presse-agrumes selon l'invention comporte en outre une sortie d'évacuation des produits pressé et un dispositif d'évacuation pour dégager le produit pressé vers la sortie d'évacuation après pressage.

De préférence, le presse-agrumes comporte en outre un réceptacle amovible pour recevoir les produits pressés, et la sortie d'évacuation communique avec ledit réceptacle.

Un intérêt est d'automatiser l'éjection du produit pressé hors de l'enceinte et son évacuation vers le réceptacle.

Avantageusement, le dispositif d'évacuation comporte un bras agencé pour pivoter entre une première position et une seconde position.

De préférence, le dispositif d'évacuation comporte un organe de déplacement motorisé pour faire pivoter le bras entre sa première et sa seconde position.

De préférence, le dispositif d'évacuation comporte en outre une butée configurée pour bloquer la sortie d'évacuation lorsque le bras est en première position, ladite butée étant escamotée lorsque le bras est en seconde position.

On comprend que la butée permet de s'assurer que le produit à presser introduit par l'utilisateur dans le presse-agrumes se positionne correctement sur le dispositif d'éjection sans tomber dans le réceptacle.

Avantageusement, la canule s'étend axialement à l'extérieur de l'enceinte au-delà de l'ouverture.

Dans ce cas, le couvercle comporte de préférence un renfoncement conformé pour recevoir la première partie de la canule lorsque le couvercle est en position fermée.

Un intérêt est de maximiser la surface de la paroi de la canule en contact avec la chaire du produit à presser.

Pour faciliter la pénétration de la canule dans le produit à presser, l'extrémité supérieure de la première partie de la canule est en forme d'ogive.

Avantageusement, le dispositif d'éjection présente une position de réception pour réceptionner un produit à presser introduit dans le presse-agrumes, au moins une partie du dispositif d'éjection, par exemple le plateau, étant disposé à l'extérieur de l'enceinte lorsque le dispositif d'éjection est en position de réception.

Lorsque l'utilisateur introduit le produit à presser dans le presse-agrumes, le dispositif d'éjection est dans une position de réception de façon à recevoir et porter le produit à presser. Le dispositif d'éjection accompagne le déplacement du produit à presser vers l'enceinte pendant que le couvercle se referme. En se refermant, le couvercle pousse le produit à presser, ce qui a pour effet d'emmancher le produit à presser sur la canule.

Avantageusement, le presse-agrumes selon l'invention comporte en outre un dispositif d'introduction pivotant pour l'introduction du produit à presser dans le corps du presse-agrumes.

De préférence, le dispositif d'introduction comporte un tiroir pivotant autour d'un axe perpendiculaire à l'axe longitudinal de la canule.

Z Selon un mode de réalisation qui ne fait pas partie de l'invention un presse-agrumes peut comprendre :
- une enceinte ayant une paroi délimitant une cavité d'un produit à presser contenant un fluide, et une ouverture formée dans la paroi pour l'introduction du produit à presser dans la cavité, la cavité étant cylindrique et présentant un axe;
- un couvercle conformé pour couvrir l'ouverture, de manière à fermer la cavité ;
- une canule s'étendant de part et d'autre de la paroi de l'enceinte, la canule ayant une première partie disposée dans la cavité configurée pour être engagée dans le produit à presser, et une seconde partie disposée en dehors de la cavité, la canule comportant en outre une conduite interne s'étendant entre les première et seconde parties, la canule ayant un axe longitudinal qui est parallèle à l'axe de la cavité ;
- une membrane extensible disposée dans la cavité et s'étendant sur tout ou partie de la paroi de manière à entourer le produit à presser disposé dans la cavité, et des moyens de gonflage configurés pour gonfler la membrane extensible, en sorte de comprimer le produit à presser emmanché sur la canule pour en extraire le fluide hors de la cavité par la conduite interne de la canule.

De préférence, l'axe longitudinal de la canule est sensiblement coaxial à l'axe de la cavité.

Le procédé de pressage d'un fruit à jus au moyen d'un presse-agrumes selon la présente invention est le suivant :
- on introduit le fruit dans la cavité au travers de l'ouverture ;
- on engage le fruit sur la première partie de la canule ;
- on actionne les moyens de gonflage pour gonfler la membrane extensible, de manière à comprimer le fruit, en sorte d'en extraire le fruit par la conduite interne de la canule.

L'opération consistant à presser un fruit au moyen d'un presse-agrumes selon la présente invention est ainsi particulièrement facile et efficace, et ne requiert pas d'efforts significatifs de la part de l'utilisateur.

### Brève description des dessins

D'autres caractéristiques et avantages de l'invention apparaîtront plus clairement et de manière complète à la lecture de la description ci-après d'un mode de réalisation préféré, donné à titre d'exemple non limitatif et en référence aux dessins annexés suivants sur lesquels :
- les figures **1** et **2** représentent schématiquement un exemple de presse-agrumes selon la présente invention, dans des vues en perspective respectivement de dessus et de dessous ;
- la figure **3** représente schématiquement une vue en coupe d'un exemple de presse-agrumes selon la présente invention, la membrane extensible étant dans un état dégonflé ;
- la figure **4** représente schématiquement une vue en coupe d'un exemple de presse-agrumes selon la présente invention, la membrane extensible étant dans un état gonflé ;
- la figure **5** représente schématiquement une vue éclatée d'un exemple de presse-agrumes selon la présente invention ;
- les figures **6A** à **6C** représentent schématiquement d'autres exemples de canule d'un presse-agrumes selon la présente invention ;
- la figure **7** représente schématiquement une vue en coupe d'un autre exemple de presse-agrumes selon la présente invention, la membrane extensible étant dans un état gonflé ;
- les figures **8 à 12** illustrent les différentes étapes du fonctionnement d'un autre mode de réalisation du presse-agrumes selon la présente invention ;
- la figure **13** est une vue de face en coupe du presse-agrumes de la figure **8** **;**
- la figure **14** est une vue en perspective semi-éclatée du presse-agrumes de la figure **8** **;** et
- les figures **15** à **18** illustrent la canule du presse-agrumes de la figure **8****.**

### Description détaillée de l'invention

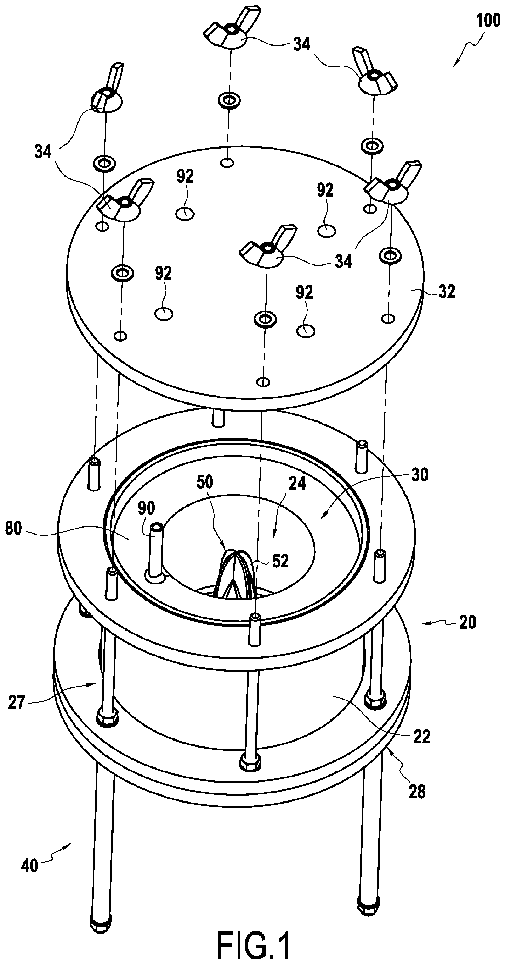

Dans l'exemple représenté aux figures **1** à **5****,** le presse-agrumes **100** selon la présente invention comporte une enceinte **20** ayant une paroi **22** délimitant une cavité **24.**

Par exemple et de manière non limitative, la cavité **24** présente une forme sensiblement cylindrique.

L'enceinte **20** comporte une ouverture **30** formée, par exemple et de manière non limitative, à son extrémité supérieure, et un couvercle **32** conformé pour couvrir l'ouverture **30** de manière à fermer la cavité **24.**

L'enceinte **20** comporte également des moyens de fermeture **34** configurés pour maintenir le couvercle **32** sur l'ouverture **30.** Dans l'exemple représenté sur les figures **1** à **5****,** les moyens de fermeture **34** comportent des vis du type papillon ; on pourrait bien évidemment concevoir, sans sortir du cadre de la présente invention, tout autre type de moyens de fermeture **34.**

La paroi **22** de l'enceinte **20** comporte une cloison périphérique **26** et un fond **28.**

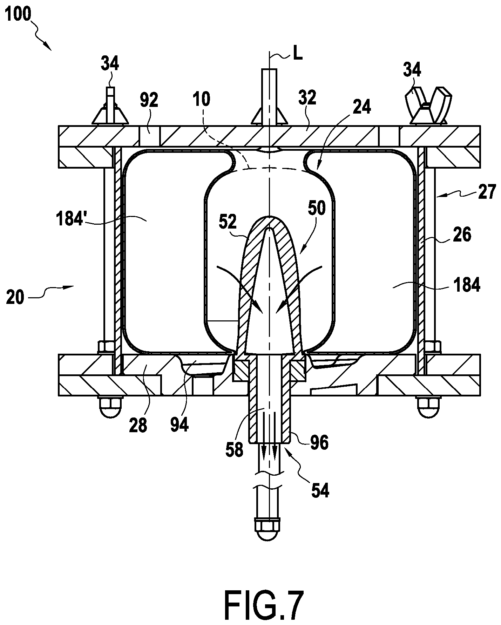

L'enceinte **20** comporte également, dans l'exemple représenté aux figures **1** à **5****,** de même que dans l'exemple représenté à la figure **7****,** des éléments de rigidification **27** s'étendant le long de la cloison périphérique **26** et configurés pour rigidifier la cavité **24.** Les éléments de rigidification sont ainsi configurés pour maintenir la forme sensiblement cylindrique de la cavité **24.**

L'enceinte **20** du presse-agrumes **100** selon la présente invention est ainsi configurée de manière que sa cavité **24** peut recevoir un produit à presser **10** tel qu'une orange, un citron, ou tout autre fruit ou légume, ledit produit à presser contenant un fluide.

Le presse-agrumes **100** comporte également une canule **50** s'étendant, par exemple et de manière non limitative, de part et d'autre du fond **28** de la paroi **22.**

La canule **50** comporte un axe longitudinal **L** ; par exemple et de manière non limitative, l'axe longitudinal **L** de la canule **50** s'étend de manière sensiblement parallèle par rapport à l'axe de la forme cylindrique défini par la cavité **24.** De préférence, les axes sont confondus.

Par ailleurs, la canule **50** comporte des première et deuxième parties longitudinales **52, 54,** la première partie **52** étant disposée dans la cavité **24** et configurée pour être engagée dans le produit à presser **10** lorsque le produit à presser est disposé dans la cavité **24.** La seconde partie **54** de la canule **50** est disposée en dehors de la cavité **24.**

La canule **50** comporte en outre une ouverture traversante **58** comprenant une conduite interne s'étendant dans les première et seconde parties longitudinales **52, 54,** et dont l'utilité apparaîtra plus clairement par la suite.

Le presse-agrumes **100** comporte en outre une membrane extensible **80** disposée dans la cavité **24** et s'étendant sur la paroi **22** de manière à entourer le produit à presser **10** lorsque celui-ci est disposé dans la cavité **24.**

La membrane extensible **80** comporte un corps **82,** par exemple et de manière non limitative de forme sensiblement cylindrique.

La membrane extensible **80** comporte également des portions gonflables **84, 84'** qui peuvent alternativement être jointes l'une à l'autre de manière à former une unique portion gonflable ou être distinctes l'une de l'autre et séparées de manière à ne pas communiquer fluidiquement l'une avec l'autre. On peut concevoir, sans sortir du cadre de la présente invention, un presse-agrumes dont la membrane extensible comporterait plus de deux portions gonflables, communiquant fluidiquement ou non les unes avec les autres.

Le presse-agrumes **100** comporte également des moyens de gonflage **90** configurés pour gonfler la membrane extensible **80.**

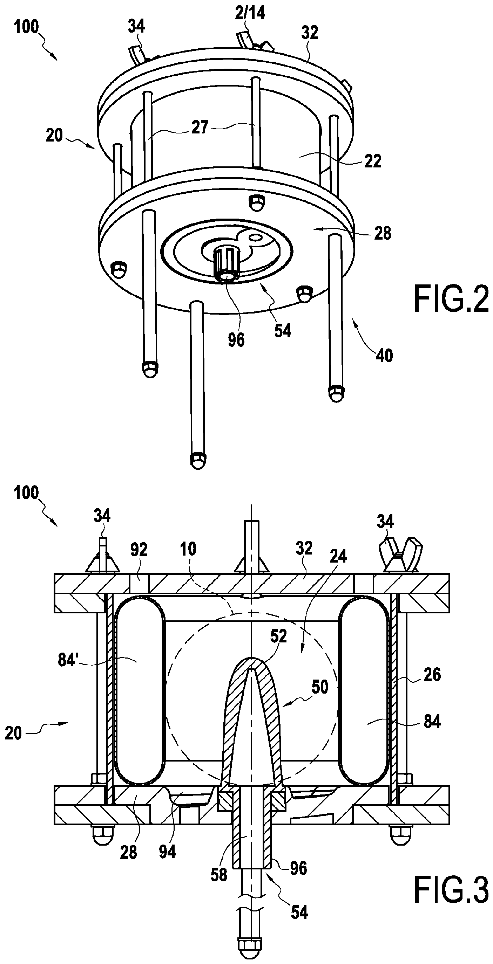

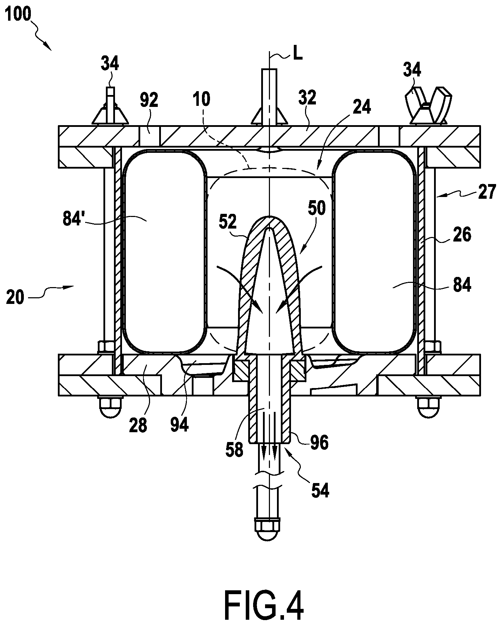

La membrane extensible **80** du presse-agrumes **100** selon la présente invention peut ainsi prendre un état dégonflé, tel que représenté sur la figure **3****,** dans lequel aucun fluide, ou une quantité négligeable de fluide, n'a été introduit dans la membrane extensible par les moyens de gonflage **90,** et un état gonflé, tel que représenté sur la figure **4****,** dans lequel les moyens de gonflage **90** ont introduit une quantité significative de fluide dans la membrane extensible **80.**

Les moyens de gonflage **90** sont configurés pour introduire tout type de fluide dans la membrane extensible **80,** tel que de l'air ou de l'eau. Les moyens de gonflage **90** sont liés à une source de fluide, telle qu'une source de gaz ou une source d'eau ; on peut également concevoir un presse-agrumes **100** dont la membrane extensible serait gonflée à la bouche par l'utilisateur ou par toute autre source de fluide.

Les portions gonflables **84, 84'** de la membrane extensible **80** s'étendent sur la cloison périphérique **26** de la paroi **22.**

Le presse-agrumes **100** selon la présente invention est ainsi configuré pour permettre d'extraire le fluide contenu dans le produit à presser **10.**

Pour ce faire, dans un premier temps, le couvercle **32** est retiré, tel que représenté sur la figure **1****,** de manière à découvrir l'ouverture **30,** pour permettre l'introduction du produit à presser **10** dans la cavité **24.**

Le produit à presser **10** disposé dans la cavité **24** est alors entouré par la membrane extensible **80,** tel que représenté en particulier sur la figure **3****,** qui se trouve dans son état dégonflé, ou partiellement gonflé, de manière à faciliter l'introduction du produit à presser **10** dans la cavité **24.**

Lors de l'introduction du produit à presser **10** dans la cavité **24,** le produit à presser **10** est engagé sur la première partie **52** de la canule **50,** de sorte qu'une partie de la canule **50** s'étende à l'intérieur du produit à presser **10,** tel que représenté sur la figure **3****.**

Le couvercle **32** est ensuite disposé de manière à couvrir l'ouverture **30.** Les moyens de fermeture **34** sont alors actionnés pour maintenir le couvercle **32** sur l'ouverture **30.**

On actionne ensuite les moyens de gonflage **90** pour introduire un fluide dans la membrane extensible **80** de manière à la faire passer de l'état dégonflé ou partiellement gonflé, à l'état gonflé ; les portions gonflables **84, 84' de** la membrane extensible **80** compriment alors le produit à presser **10,** tel que représenté sur la figure **4****.**

Par exemple et de manière non limitative, le couvercle **32** présente un moyen de calage fixé sur sa surface interne, pour contribuer au maintien du produit à presser **10** dans le volume délimité par la membrane extensible **80.**

Le fluide contenu dans le produit à presser **10** est alors dirigé vers la première partie **52** de la canule **50** et, par suite, s'écoule dans la conduite interne **58** jusqu'à atteindre la seconde partie **54** de la canule **50.**

On comprend ainsi que l'augmentation du volume de la membrane extensible **80** à la suite de l'actionnement des moyens de gonflage **90** permet de comprimer le produit à presser **10** pour en extraire une part significative, voire la totalité, du fluide qu'il contient ; par exemple et de manière non limitative, le presse-agrumes **100** selon la présente invention permet d'extraire plus de 40 % du fluide contenu par le produit à presser **10,** de préférence plus de 60 %, de préférence encore plus de 80 % ; le fluide est ensuite récupéré en dehors de la cavité **24** à proximité de la seconde partie **54** de la canule **50.**

Dans l'exemple représenté en particulier sur la figure **4****,** la membrane extensible **80** présente, lorsqu'elle est dans l'état gonflé, une section sensiblement constante ; on pourrait concevoir, sans sortir du cadre de la présente invention, et tel que représenté en particulier sur la figure **7****,** une membrane extensible dont les portions gonflables **184, 184'** présentent, lorsque la membrane extensible est dans l'état gonflé, une section non constante, de manière à être conformées pour épouser la forme du produit à presser **10.** Les portions gonflables **184, 184'** de la membrane extensible **80** peuvent ainsi être conformées pour présenter des extrémités inférieures et supérieures ayant une section plus importante que leur portion médiane, de manière à épouser la forme d'un produit à presser de forme sensiblement sphérique.

Après que le produit à presser **10** a été comprimé pour en extraire le fluide, les moyens de fermeture **34** sont actionnés de manière à permettre de retirer le couvercle **32** de l'ouverture **30,** pour extraire le produit à presser **10,** désormais vidé d'une part significative du fluide qu'il contenait, hors de la cavité **24.**

Tel que représenté sur les différentes figures, le presse-agrumes **100** selon la présente invention comporte également des moyens d'admission d'un fluide **92,** tel que de l'eau pour introduire ledit fluide dans la cavité **24.** Par exemple et de manière non limitative, les moyens d'admission d'un fluide **92** comportent des ouvertures traversantes formées dans le couvercle **32.**

Ainsi, après que le produit à presser **10** a été retiré de la cavité **24,** un fluide, tel que de l'eau, est introduit dans ladite cavité **24** pour la nettoyer. De manière à ne pas souiller l'espace environnant le presse-agrumes **100,** l'actionnement des moyens d'admission d'un fluide **92** peut n'être permis qu'après la fermeture par le couvercle **32** de l'ouverture **30** de l'enceinte **20.**

Le presse-agrumes **100** peut comporter de manière optionnelle un dispositif émetteur d'ultrasons **94,** configuré pour émettre des ultrasons dans le fluide qui a été introduit dans la cavité **24** par les moyens d'admission d'un fluide **92,** de manière à contribuer au nettoyage de ladite cavité **24.**

Par exemple et de manière non limitative, le presse-agrumes **100** comporte en outre des moyens de rotation **96** configurés pour faire pivoter la canule **50** autour de son axe longitudinal **L** ; les moyens de rotation **96** permettent ainsi de faciliter l'emmanchement du produit à presser **10** sur la première partie **52** de la canule **50,** au moment de son introduction dans la cavité **24,** de manière à faciliter l'extraction de son fluide.

Le presse-agrumes **100** comporte également un support **40,** en l'espèce un trépied, s'étendant à partir du fond **28** de la paroi **22,** de manière à faciliter l'installation et l'utilisation stables du presse-agrumes **100.**

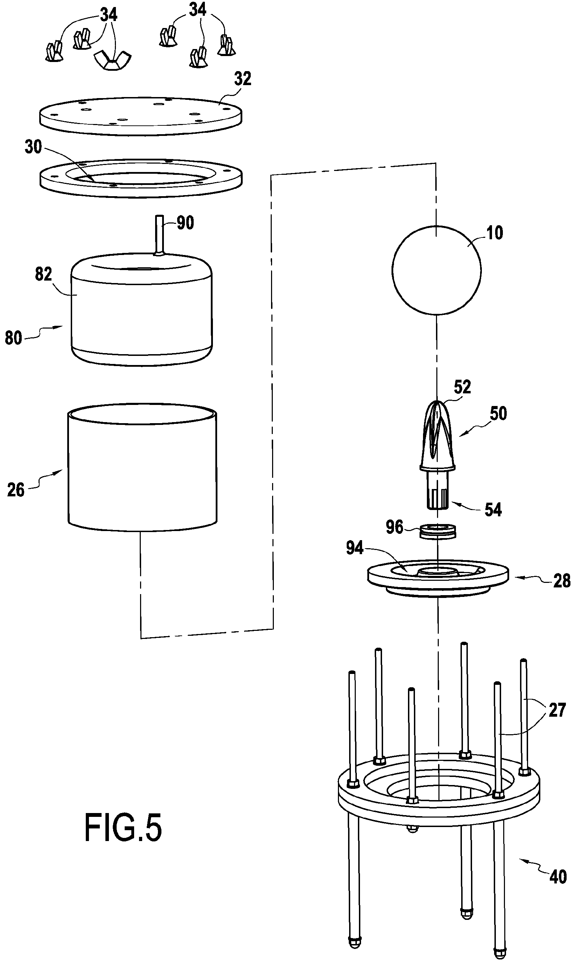

Tel que représenté en particulier sur la figure **5****,** la canule **50** présente une surface extérieure **56** et des saillies d'engagement **58** s'étendant à partir de la surface extérieure **56** pour favoriser l'emmanchement du produit à presser **10** sur la première partie **52** de la canule **50.**

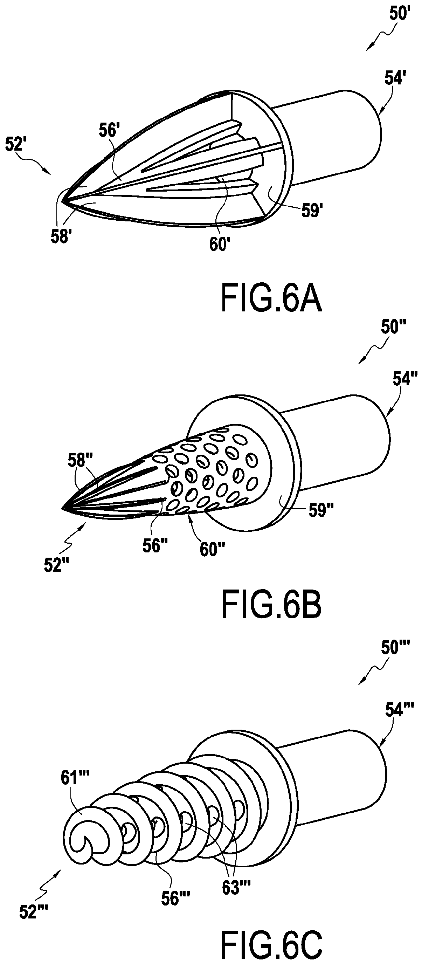

Les figures **6A, 6B** et **6C** représentent trois alternatives de réalisation de la canule **50', 50", 50‴** configurée pour équiper le presse-agrumes 100 selon la présente invention.

Dans l'exemple représenté sur la figure **6A****,** la première partie **52' de** la canule **50'** comporte une surface extérieure **56' ;** en outre, la canule **50'** comporte une butée annulaire **59'** s'étendant à partir de la surface extérieure **56'** de la canule **50'** et configurée pour limiter la profondeur d'engagement de la canule **50'** dans le produit à presser **10.**

La canule **50'** comporte en outre des lames d'engagement **58'** s'étendant à partir de la butée annulaire **59'** le long de la surface extérieure **56'** ; les lames d'engagement **58',** qui constituent des saillies, facilitent ainsi l'emmanchement du produit à presser **10** sur la canule **50',** ainsi que l'extraction du fluide, en hachant la chair du produit à presser **10.**

En outre, la canule **50'** comporte des fenêtres **60'** configurées pour permettre l'écoulement du fluide contenu dans le produit à presser **10** dans la conduite interne de la canule **50'.**

Dans l'exemple représenté sur la figure **6B****,** la canule **50"** comporte également une butée annulaire **59",** la première partie **52"** comportant une surface extérieure **56".**

La canule **50"** comporte en outre des lames d'engagement **58",** qui constituent des saillies, s'étendant le long de la surface extérieure **56"** permettant de faciliter l'emmanchement du produit à presser et l'extraction de son fluide ; la canule **50"** comporte en outre une portion perforée **60"** disposée entre la première partie **52"** et la butée annulaire **59",** pour permettre l'écoulement du fluide extrait du produit à presser **10** dans la conduite interne de la canule **50".**

Dans l'exemple représenté sur la figure **6C****,** la première partie **52‴** de la canule **50‴** présente une surface extérieure **56‴** et une butée annulaire **59‴** ; la canule **50‴** comporte en outre une surface hélicoïdale **61‴** s'étendant à partir de la surface extérieure **56‴**, permettant de faciliter l'emmanchement du produit à presser et l'extraction de son fluide, en particulier lorsque l'un des éléments pris parmi le produit à presser et la canule est mis en rotation autour de l'axe longitudinal **L** de la canule.

En outre, la canule **50‴** comporte des ouvertures **63‴** débouchant dans la conduite interne pour permettre l'extraction du fluide hors du produit à presser **10.**

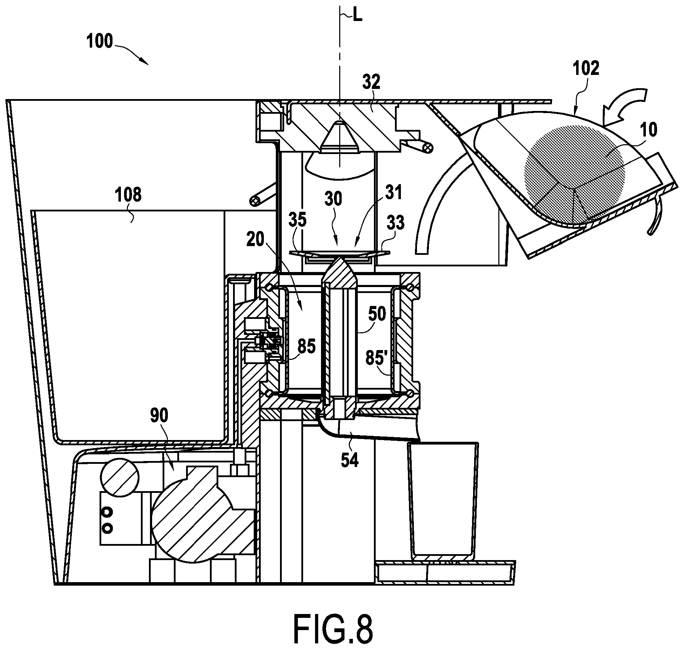

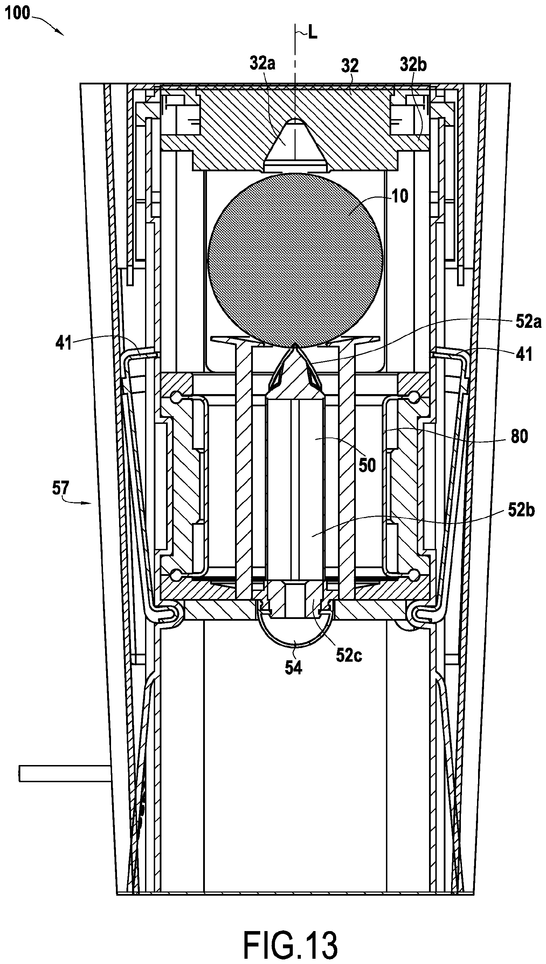

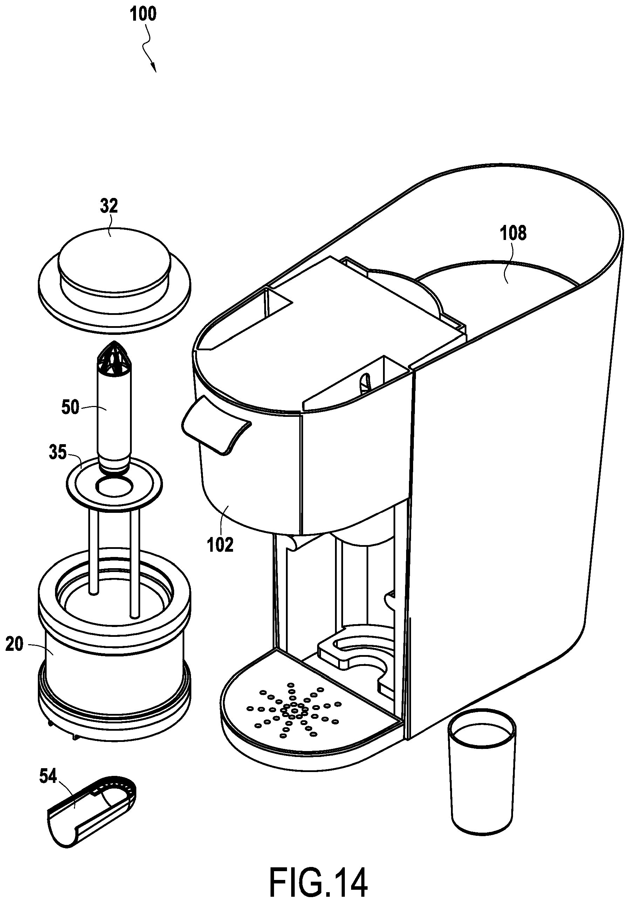

Les figures **8** à **18** illustrent un autre mode de réalisation d'un presse-agrumes **100** selon la présente invention.

De manière similaire aux autres modes de réalisation, le presse-agrumes **100** comporte une enceinte **20,** par exemple de forme sensiblement cylindrique, ayant une paroi **22** délimitant une cavité **24,** l'enceinte **20** ayant en outre une ouverture **30** pour permettre l'introduction d'un produit à presser **10** dans la cavité **24.**

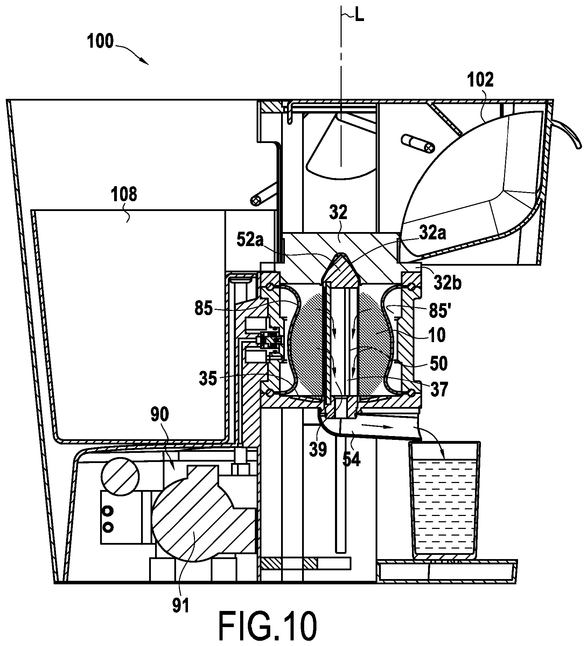

Ce presse-agrumes comporte également une canule **50** qui comprend une première partie **52** disposée dans l'enceinte et une seconde partie **54** disposée à l'extérieure de l'enceinte, en dessous de cette dernière. Les première et seconde parties comportent une conduite interne **39** pour évacuer le jus extrait du produit à presser **10** hors de l'enceinte. La canule comporte par ailleurs des orifices **37,** illustrés sur la figure **10****,** par lesquels le jus du produit pressé entre dans la canule. Sur les figures **8** à **12****,** on a illustré un exemple de canule. Sans sortir du cadre de la présente invention, on peut également utiliser l'une ou l'autre des canules décrites ci-dessus.

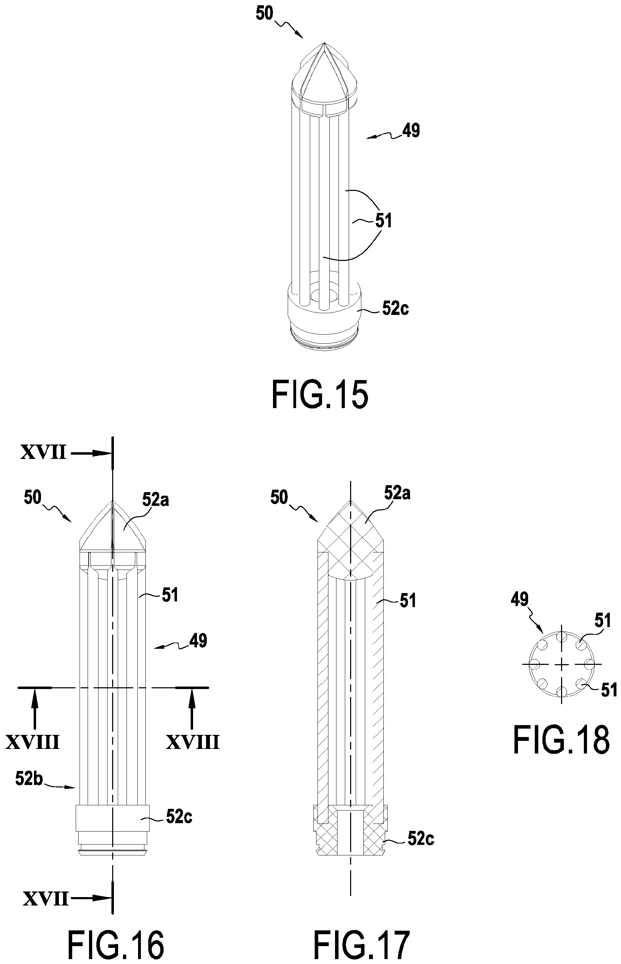

Par ailleurs, la canule **50,** illustrée en figures **15** à **18****,** s'étend axialement à l'extérieur de l'enceinte au-delà de l'ouverture **30.** L'extrémité supérieure **52a** de la première partie **52** de la canule est en forme d'ogive, afin de faciliter l'emmanchement du produit à presser sur la canule.

La première partie de la canule **52** comporte un corps **52b** qui s'étend entre une base **52c** et l'extrémité supérieure en forme d'ogive **52a,** le corps étant muni d'orifices **37.**

On comprend que cette conformation permet de maximiser la surface de contact entre la canule et le produit à presser.

Le corps comporte une cage cylindrique **49** une pluralité de tiges axiales **51** espacées les unes des autres, les tiges s'étendant sur sensiblement toute la hauteur de la cavité.

Le presse-agrumes **100** comporte également un couvercle mobile **32** qui peut prendre alternativement une position ouverte, telle que représentée sur la figure **8****,** dans laquelle le produit à presser **10** peut être introduit dans la cavité **24,** et une position fermée, telle que représentée sur la figure **10****,** dans laquelle le produit à presser **10** est maintenu dans la cavité **24.** Dans cet exemple, le couvercle est mobile selon une direction parallèle à l'axe longitudinal **L** de la canule. Dans cet exemple, l'axe longitudinal **L** de la canule est sensiblement vertical. Pour ce faire, le presse-agrumes **100** comporte un dispositif motorisé (non illustré) qui est agencé pour entrainer le couvercle en translation. Le dispositif motorisé est dimensionné en sorte que le couvercle exerce une force de poussée suffisante pour emmancher le produit à presser sur la canule, lors du déplacement du couvercle de sa position ouverte à sa position fermée.

En position fermée, l'extrémité supérieure **52a** de la canule est engagée dans un renfoncement **32a** ménagé dans le couvercle. On comprend donc que la canule traverse axialement le produit pressé. Cela permet de maximiser la surface utile entre la canule et le produit à presser, ce qui permet d'améliorer le rendement d'extraction de jus.

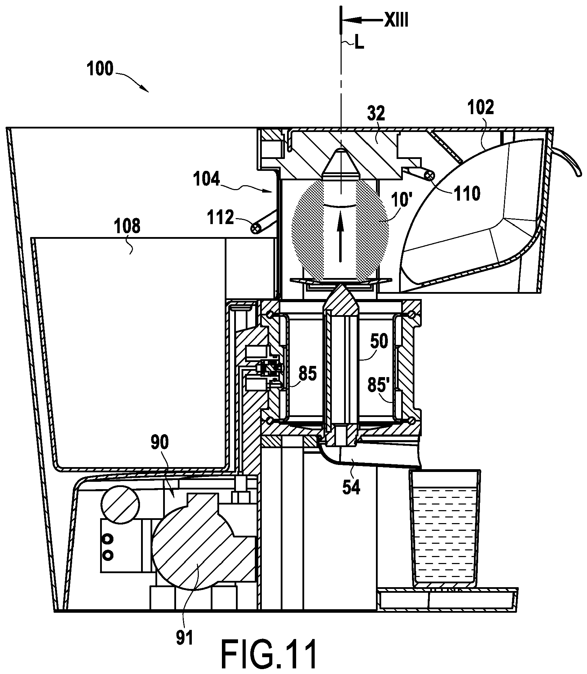

Le presse-agrumes **100** comporte en outre un dispositif d'éjection **31** pour évacuer le produit pressé hors de la cavité, après extraction du jus. Le dispositif d'éjection **31** comporte une base mobile **33** configurée pour recevoir une portion inférieure du produit à presser **10.** La base mobile **33** est déplaçable selon l'axe longitudinal L de la canule. La base mobile comporte un plateau annulaire **35** agencé pour entourer la canule. Le plateau annulaire est donc déplaçable longitudinalement le long de la canule. Lors de l'opération d'extraction du jus, le plateau annulaire **35** est disposé au fond de la cavité. Comme illustré en figure **11****,** après extraction du jus, le couvercle est ouvert et la base mobile est déplacée vers l'ouverture de l'enceinte afin d'éjecter le produit pressé hors de la cavité.

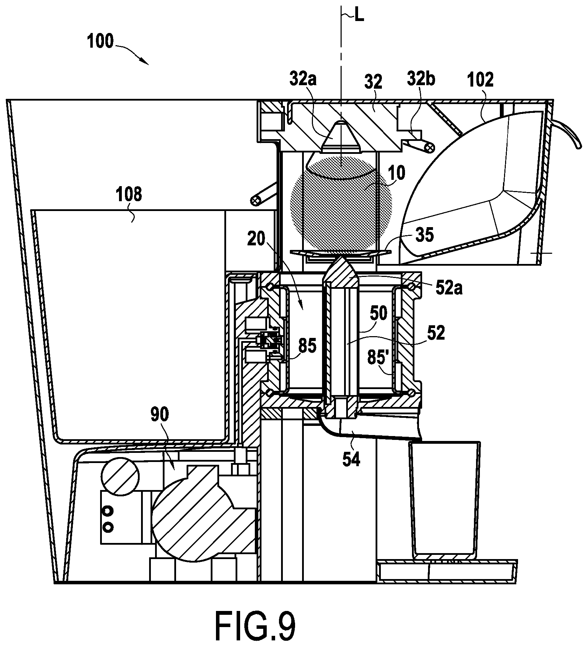

En référence aux figures **8** et **9****,** on constate que le dispositif d'éjection **31** présente une position de réception pour réceptionner un produit à presser introduit dans le presse-agrumes, le dispositif d'éjection se trouvant à l'extérieur de la cavité lorsqu'il se trouve en position de réception. En position de réception, le plateau annulaire **35** se trouve légèrement au-dessus de l'extrémité supérieure de la canule. Dans cette position de réception, le couvercle **32** se trouve en position ouverte, à distance de l'ouverture de l'enceinte.

La base mobile **35** a également pour fonction de guider le déplacement et l'emmanchement sur la canule **50.** On comprend donc que la base mobile **33** et le couvercle mobile **32** sont déplacés de manière sensiblement synchronisée pour déplacer le produit à presser **10** vers la cavité **24** en poussant sur le produit à presser de façon à ce qu'il s'emmanche sur la canule **50.**

Le presse-agrumes **100** comporte également un dispositif d'introduction **102** configuré pour permettre l'introduction du produit à presser **10** dans la cavité.

Par exemple et de manière non limitative, le dispositif d'introduction **102** comporte un tiroir monté pivotant autour d'un axe, par exemple et de manière non limitative sensiblement horizontal. Le dispositif d'introduction **102** peut ainsi prendre une position d'accueil, représentée sur la figure **8****,** dans laquelle le produit à presser **10** peut être introduit dans le dispositif d'introduction **102.** Le dispositif d'introduction **102** est ensuite pivoté, de manière à prendre une position d'alimentation représentée sur la figure **9** dans laquelle le produit à presser **10** est amené sur le plateau annulaire **33** du dispositif d'éjection en position de réception, comme illustré en figure **9****.**

Comme expliqué ci-dessus, le couvercle mobile **32** est configuré de manière à permettre, par son déplacement entre sa position ouverte et sa portion fermée, l'engagement du produit à presser **10** sur la canule **50.** Pour ce faire, le couvercle **32** réalise une poussée verticale dirigée vers le bas sur le produit à presser qui s'emmanche alors sur la première partie de la canule. Le couvercle obture alors l'enceinte et le plateau annulaire se trouve au fond de la cavité.

Le presse-agrume comporte par ailleurs un système de verrouillage **57** pour assurer la fermeture de l'enceinte pendant l'opération de gonflage de la membrane extensible **80.** Dans cet exemple, il s'agit de crabots **41** qui viennent se positionner au-dessus d'une collerette **32b** du couvercle lorsque ce dernier est en position fermée.

La canule s'étend de manière sensiblement parallèle par rapport à l'axe de la forme cylindrique définie par la cavité **24,** pour faciliter l'extraction ultérieure de son fluide.

En outre, de manière similaire aux modes de réalisation précédents, le presse-agrumes **100** comporte une membrane extensible **80** disposée dans la cavité **24** et s'étendant sur la paroi **22** de manière à entourer le produit à presser **10.**

Par exemple et de manière non limitative, la membrane extensible **80** comporte des première et seconde portions extensibles **85, 85'** fixées sur la paroi **22** de manière à définir un volume entre la paroi **22** et lesdites première et seconde portions extensibles **85, 85'** ; le presse-agrumes **100** comporte également des moyens de gonflage **90,** qui comprennent par exemple et de manière non limitative un compresseur **91,** pour permettre l'introduction d'un fluide dans ledit volume, de manière à déplacer les première et seconde portions extensibles **85, 85'** en sorte de comprimer le produit à presser **10** disposé dans la cavité **24** pour en extraire au fluide au travers de la canule **50,** tel que cela apparaît en particulier sur la figure **10****.** De préférence, la pression de gonflage est comprise entre 2 et 5 bars. Il apparaît ainsi en particulier que le presse-agrumes **100** comporte en outre un conduit monté sur l'une des parties longitudinales **54** de la canule **50** pour permettre au fluide extrait du produit à presser **10** de s'écouler dans un récipient, tel qu'un verre.

Le presse-agrumes comporte en outre un dispositif de déplacement (non illustré) pour déplacer ensemble le couvercle **32** avec le plateau annulaire de la base mobile **33** du dispositif d'éjection selon une direction parallèle à l'axe longitudinal **L** de la canule. Ce dispositif de déplacement est motorisé grâce à un motoréducteur associé à une vis sans fin. Il permet donc d'automatiser l'emmanchement du produit à presser sur la canule, ainsi que son éjection hors de l'enceinte.

Le dispositif de déplacement est configuré de sorte que la base mobile **33** est disposée au fond de la cavité lorsque le couvercle est en position fermée, tandis que la base mobile est disposée au niveau ou au-dessus de l'ouverture **30** lorsque le couvercle est en position ouverte.

Après extraction du jus, le dispositif de déplacement est actionné de manière à amener, de façon concomitante, le couvercle en position ouverte et le dispositif d'éjection en position de réception, ce qui a pour effet d'éjecter le produit pressé hors de l'enceinte.

Le presse-agrumes comporte en outre une sortie d'évacuation **104** du produit pressé **10'** et un dispositif d'évacuation **106** pour dégager le produit pressé **10' vers** la sortie d'évacuation après pressage.

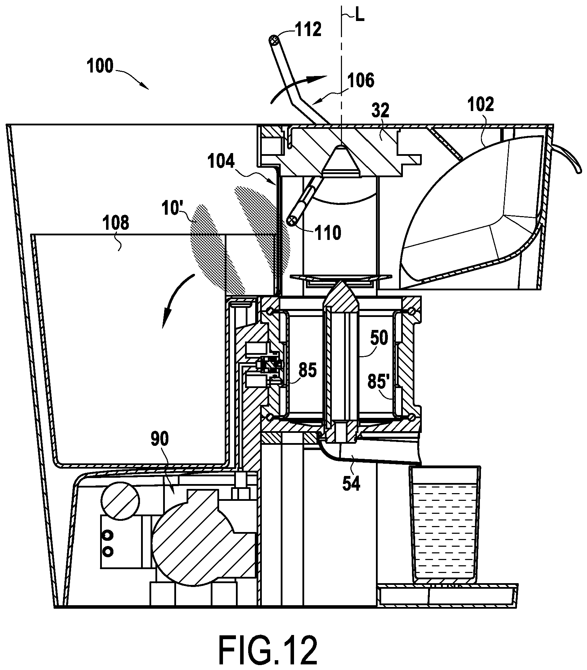

Par ailleurs, comme illustré en figure **12****,** le presse-agrumes comporte en outre un réceptacle amovible **108** pour recevoir le produit pressé **10',** et la sortie d'évacuation communique avec ledit réceptacle.

Pour évacuer le produit pressé **10'** vers le réceptacle **108,** le dispositif d'évacuation **106** comporte un bras **110** agencé pour pivoter entre une première position et une seconde position.

Comme illustré en figure **11****,** le dispositif d'évacuation comporte en outre une butée **112** configurée pour bloquer la sortie d'évacuation **104** lorsque le bras est en première position, ladite butée **112** étant escamotée lorsque le bras est en seconde position. Cette butée a pour fonction d'éviter que le produit à presser ne tombe dans le réceptacle au moment de son introduction dans le presse-agrumes. On comprend que le pivotement du bras **110** s'accompagne de l'escamotage de la butée, par quoi le produit pressé est poussé dans le réceptacle.

La description ci-dessus est donnée à titre d'exemple, et n'est donc pas limitative de l'invention.

En particulier, l'invention, bien que particulièrement adaptée au domaine des jus de fruits ou de légumes, peut également être utilisée pour extraire de manière efficace et précise le fluide contenu dans des produits autres que des fruits ou des légumes.

## Revendications

1. Presse-agrumes (100) comprenant :
- une enceinte (20) ayant une paroi (22) délimitant une cavité (24) d'un produit à presser (10) contenant un fluide, et une ouverture (30) formée dans la paroi pour l'introduction du produit à presser dans la cavité;
- une canule (50, 50', 50", 50‴) s'étendant de part et d'autre de la paroi de l'enceinte, la canule ayant une première partie (52, 52', 52", 52‴) disposée dans la cavité configurée pour être engagée dans le produit à presser, et une seconde partie (54) disposée en dehors de la cavité, la canule comportant en outre une conduite interne (58) s'étendant dans les première et seconde parties ;
- une membrane extensible (80) disposée dans la cavité et s'étendant sur tout ou partie de la paroi de manière à entourer le produit à presser disposé dans la cavité, et des moyens de gonflage (90) configurés pour gonfler la membrane extensible, en sorte de comprimer le produit à presser emmanché sur la première partie de la canule pour en extraire le fluide hors de la cavité par la conduite interne de la canule ;
le presse-agrumes étant **caractérisé en ce que** l'enceinte comporte en outre :
• un couvercle (32) conformé pour obturer l'ouverture, de manière à fermer la cavité, le couvercle étant mobile entre une position ouverte dans laquelle l'enceinte est ouverte, et une position fermée dans laquelle l'ouverture est obturée par le couvercle ; et
• un dispositif d'éjection (31) pour évacuer le produit pressé hors de la cavité, le dispositif d'éjection comportant une base mobile (33) qui est déplaçable selon l'axe longitudinal de la canule.

2. Presse-agrumes (100) selon la revendication 1, **caractérisé en ce que** la paroi comporte une cloison périphérique (26) et un fond (28), la canule s'étendant de part et d'autre du fond.

3. Presse-agrumes (100) selon la revendication 1 ou 2, **caractérisé en ce que** la cavité (24) est de forme sensiblement cylindrique.

4. Presse-agrumes (100) selon l'une quelconque des revendications 1 à 3, **caractérisé en ce que** la membrane extensible comporte un corps (82) de forme sensiblement cylindrique configuré pour entourer le produit à presser disposé dans la cavité.

5. Presse-agrumes (100) selon l'une quelconque des revendications 1 à 4, **caractérisé en ce que** la paroi comporte une cloison périphérique (26), la membrane extensible comportant une portion gonflable (84, 84') s'étendant sur tout ou partie de la cloison périphérique.

6. Presse-agrumes (100) selon l'une quelconque des revendications 1 à 5, **caractérisé en ce qu'**il comporte en outre des moyens d'admission (92) d'un fluide tel que de l'eau pour introduire ledit fluide dans la cavité.

7. Presse-agrumes (100) selon la revendication 6, **caractérisé en ce qu'**il comporte en outre un dispositif émetteur d'ultra-sons (94) configuré pour émettre des ultra-sons dans le fluide contenu dans la cavité, de manière à nettoyer ladite cavité.

8. Presse-agrumes (100) selon l'une quelconque des revendications 1 à 7, **caractérisé en ce que** la canule présente un axe longitudinal (L), le presse-agrumes comportant en outre des moyens de rotation (96) configurés pour faire pivoter la canule autour de son axe longitudinal.

9. Presse-agrumes (100) selon l'une quelconque des revendications 1 à 8, **caractérisé en ce que** la première partie (52‴) de la canule (50‴) comporte une surface extérieure (56‴), la canule comportant en outre une saillie (58', 58", 61‴) s'étendant sur la surface extérieure de la première partie.

10. Presse-agrumes (100) selon l'une quelconque des revendications précédentes, **caractérisé en ce que** la base mobile comporte un plateau annulaire (35) agencé pour entourer la canule.

11. Presse-agrumes selon l'une quelconque des revendications précédentes, **caractérisé en ce qu'**il comporte en outre un dispositif de déplacement pour déplacer ensemble le couvercle (32) avec la base mobile (33) du dispositif d'éjection selon une direction parallèle à l'axe longitudinal de la canule.

12. Presse-agrumes selon la revendication 11, **caractérisé en ce que** le dispositif de déplacement est configuré de sorte que la base mobile (33) est disposée au fond de la cavité lorsque le couvercle est en position fermée, tandis que la base mobile est disposée au niveau ou au-dessus de l'ouverture (30) lorsque le couvercle est en position ouverte.

13. Presse-agrumes selon l'une quelconque des revendications précédentes, **caractérisé en ce qu'**il comporte en outre une sortie d'évacuation (104) du produit pressé et un dispositif d'évacuation (106) pour dégager le produit pressé (10') vers la sortie d'évacuation après pressage, et **en ce que** le dispositif d'évacuation (106) comporte un bras (110) agencé pour pivoter entre une première position et une seconde position.

14. Presse-agrumes selon l'une quelconque des revendications précédentes, **caractérisé en ce que** la canule (50) s'étend axialement à l'extérieur de l'enceinte au-delà de l'ouverture (30).

15. Presse-agrumes selon l'une quelconque des revendications précédentes, **caractérisé en ce que** la première partie (52) de la canule présente une extrémité supérieure (52a) en forme d'ogive, et **en ce que**, en position fermée, l'extrémité supérieure (52a) de la canule est engagée dans un renfoncement (32a) ménagé dans le couvercle.

16. Presse-agrumes selon la revendication 15, **caractérisé en ce que** la première partie de la canule (52) comporte un corps (52b) qui s'étend entre une base (52c) et l'extrémité supérieure en forme d'ogive (52a), le corps étant muni d'orifices (37) et **en ce que** le corps comporte une cage cylindrique (49) munie d'une pluralité de tiges axiales (51) espacées les unes des autres, les tiges s'étendant sur sensiblement toute la hauteur de la cavité.

17. Presse-agrumes selon l'une quelconque des revendications précédentes, **caractérisé en ce que** le dispositif d'éjection (31) présente une position de réception pour réceptionner un produit à presser introduit dans le presse-agrumes, au moins une partie du dispositif d'éjection se trouvant à l'extérieur de la cavité lorsque le dispositif d'éjection est en position de réception.

## Patentansprüche

1. Zitruspresse (100), umfassend:
- ein Gehäuse (20), das eine Wand (22) aufweist, die einen Hohlraum (24) für ein auszupressendes Produkt (10) begrenzt, das ein Fluid enthält, und eine Öffnung (30), die in der Wand zum Einführen des auszupressenden Produkts in den Hohlraum ausgebildet ist,
- eine Kanüle (50, 50', 50", 50‴), die sich auf beiden Seiten der Wand des Gehäuses erstreckt, wobei die Kanüle einen ersten Teil (52, 52', 52", 52"'), der in dem Hohlraum angeordnet und dazu ausgestaltet ist, in das auszupressende Produkt einzugreifen, und einen zweiten Teil (54) aufweist, der außerhalb des Hohlraums angeordnet ist, wobei die Kanüle ferner eine innere Leitung (58) umfasst, die sich in dem ersten und zweiten Teil erstreckt,
- eine dehnbare Membran (80), die in dem Hohlraum angeordnet ist und sich über die gesamte oder einen Teil der Wand erstreckt, um das in dem Hohlraum angeordnete auszupressende Produkt zu umgeben, und Aufblasmittel (90), die dazu ausgestaltet sind, die dehnbare Membran aufzublasen, um das auf den ersten Teil der Kanüle aufgesetzte auszupressende Produkt zusammenzudrücken, um das Fluid daraus aus dem Hohlraum durch die innere Leitung der Kanüle zu extrahieren,
wobei die Zitruspresse **dadurch gekennzeichnet ist, dass** das Gehäuse ferner umfasst:
• einen Deckel (32), der angepasst ist, um die Öffnung zum Schließen des Hohlraums zu verschließen, wobei der Deckel zwischen einer offenen Position, in der das Gehäuse offen ist und einer geschlossenen Position beweglich ist, in der die Öffnung durch den Deckel verschlossen ist, und
• eine Auswurfvorrichtung (31) zum Abführen des ausgepressten Produkts aus dem Hohlraum, wobei die Auswurfvorrichtung eine bewegliche Basis (33) umfasst, die entlang der Längsachse der Kanüle verschiebbar ist.

2. Zitruspresse (100) nach Anspruch 1, **dadurch gekennzeichnet, dass** die Wand eine Umfangswand (26) und einen Boden (28) umfasst, wobei sich die Kanüle auf beiden Seiten des Bodens erstreckt.

3. Zitruspresse (100) nach Anspruch 1 oder 2, **dadurch gekennzeichnet, dass** der Hohlraum (24) eine im Wesentlichen zylindrische Form aufweist.

4. Zitruspresse (100) nach einem der Ansprüche 1 bis 3, **dadurch gekennzeichnet, dass** die dehnbare Membran einen Körper (82) mit einer im Wesentlichen zylindrischen Form umfasst, der dazu ausgestaltet ist, das in dem Hohlraum angeordnete auszupressende Produkt zu umgeben.

5. Zitruspresse (100) nach einem der Ansprüche 1 bis 4, **dadurch gekennzeichnet, dass** die Wand eine Umfangswand (26) umfasst, wobei die dehnbare Membran einen aufblasbaren Abschnitt (84, 84') umfasst, der sich über die gesamte oder einen Teil der Umfangswand erstreckt.

6. Zitruspresse (100) nach einem der Ansprüche 1 bis 5, **dadurch gekennzeichnet, dass** sie ferner Einlassmittel (92) eines Fluids wie Wasser zum Einleiten des Fluids in den Hohlraum umfasst.

7. Zitruspresse (100) nach Anspruch 6, **dadurch gekennzeichnet, dass** sie ferner eine Ultraschallemissionsvorrichtung (94) umfasst, die dazu ausgestaltet ist, in das in dem Hohlraum enthaltenen Fluid Ultraschall zu emittieren, um den Hohlraum zu reinigen.

8. Zitruspresse (100) nach einem der Ansprüche 1 bis 7, **dadurch gekennzeichnet, dass** die Kanüle eine Längsachse (L) aufweist, wobei die Zitruspresse ferner Drehmittel (96) umfasst, die dazu ausgestaltet sind, die Kanüle um ihre Längsachse schwenken zu lassen.

9. Zitruspresse (100) nach einem der Ansprüche 1 bis 8, **dadurch gekennzeichnet, dass** der erste Teil (52"') der Kanüle (50‴) eine Außenfläche (56‴) umfasst, wobei die Kanüle ferner einen Vorsprung (58', 58", 61‴) umfasst, der sich über die Außenfläche des ersten Teils erstreckt.

10. Zitruspresse (100) nach einem der vorhergehenden Ansprüche, **dadurch gekennzeichnet, dass** die bewegliche Basis eine ringförmige Scheibe (35) umfasst, die eingerichtet ist, um die Kanüle zu umgeben.

11. Zitruspresse nach einem der vorhergehenden Ansprüche, **dadurch gekennzeichnet, dass** sie ferner eine Verschiebevorrichtung umfasst, um den Deckel (32) zusammen mit der beweglichen Basis (33) der Auswurfvorrichtung entlang einer Richtung parallel zu der Längsachse der Kanüle zu verschieben.

12. Zitruspresse nach Anspruch 11, **dadurch gekennzeichnet, dass** die Verschiebevorrichtung derart ausgestaltet ist, dass die bewegliche Basis (33) am Boden des Hohlraums angeordnet ist, wenn sich der Deckel in der geschlossenen Position befindet, während die bewegliche Basis auf Höhe der Öffnung (30) oder darüber angeordnet ist, wenn sich der Deckel in der offenen Position befindet.

13. Zitruspresse nach einem der vorhergehenden Ansprüche, **dadurch gekennzeichnet, dass** sie ferner einen Abführauslass (104) des ausgepressten Produkts und eine Abführvorrichtung (106) umfasst, um das ausgepresste Produkt (10') nach dem Auspressen an den Abführauslass abzugeben, und dadurch, dass die Abführvorrichtung (106) einen Arm (110) umfasst, der eingerichtet ist, um zwischen einer ersten Position und einer zweiten Position zu schwenken.

14. Zitruspresse nach einem der vorhergehenden Ansprüche, **dadurch gekennzeichnet, dass** sich die Kanüle (50) axial außerhalb des Gehäuses über die Öffnung (30) hinaus erstreckt.

15. Zitruspresse nach einem der vorhergehenden Ansprüche, **dadurch gekennzeichnet, dass** der erste Teil (52) der Kanüle ein oberes Ende (52a) in Form eines Spitzbogens aufweist, und dadurch, dass das obere Ende (52a) der Kanüle in der geschlossenen Position in eine Vertiefung (32a) eingreift, die in dem Deckel vorgesehen ist.

16. Zitruspresse nach Anspruch 15, **dadurch gekennzeichnet, dass** der erste Teil der Kanüle (52) einen Körper (52b) umfasst, der sich zwischen einer Basis (52c) und dem oberen Ende (52a) in Form eines Spitzbogens erstreckt, wobei der Körper mit Bohrungen (37) versehen ist, und dadurch, dass der Körper einen zylindrischen Käfig (49) umfasst, der mit mehreren axialen Stäben (51) versehen ist, die voneinander beabstandet sind, wobei sich die Stäbe im Wesentlichen über die gesamte Höhe des Hohlraums erstrecken.

17. Zitruspresse nach einem der vorhergehenden Ansprüche, **dadurch gekennzeichnet, dass** die Auswurfvorrichtung (31) eine Aufnahmeposition zum Aufnehmen eines in die Zitruspresse eingeführten auszupressenden Produkts aufweist, wobei sich zumindest ein Teil der Auswurfvorrichtung außerhalb des Hohlraums befindet, wenn sich die Auswurfvorrichtung in der Aufnahmeposition befindet.

## Claims

1. A citrus juicer (100) comprising:
- an enclosure (20) having a wall (22) defining a cavity (24) for produce for pressing (10) containing a fluid, and an opening (30) formed in the wall for introducing the produce for pressing into the cavity;
- a cannula (50, 50', 50", 50"') extending through the wall of the enclosure, the cannula having a first portion (52, 52', 52", 52"') arranged inside the cavity and configured to be engaged in the produce for pressing, and a second portion (54) arranged outside the cavity, the cannula further including an internal duct (58) extending in the first and second portions; and
- an extensible membrane (80) arranged in the cavity and extending over all or part of the wall so as to surround the produce for pressing arranged inside the cavity, and inflation means (90) configured to inflate the extensible membrane so as to compress the produce for pressing engaged on the first portion of the cannula in order to extract the fluid out from the cavity via the internal duct of the cannula;
the citrus juicer being **characterized in that** the enclosure further comprises:
- a lid (32) shaped to close the opening so as to close the cavity, the lid being movable between an open position in which the enclosure is open and a closed position in which the opening is closed by the lid; and
- an ejector device (31) for discharging the pressed produce out from the cavity , said ejector device including a movable base (33) that is movable along the longitudinal axis of the cannula.

2. A citrus juicer (100) according to claim 1, **characterized in that** the wall comprises a peripheral partition (26) and a bottom (28), the cannula extending through the bottom.

3. A citrus juicer (100) according to claim 1 or 2, **characterized in that** the cavity (24) is substantially cylindrical in shape.

4. A citrus juicer (100) according to any one of claims 1 to 3, **characterized in that** the extensible membrane comprises a body (82) of substantially cylindrical shape configured to surround the produce for pressing when arranged in the cavity.

5. A citrus juicer (100) according to any one of claims 1 to 4, **characterized in that** the wall includes a peripheral partition (26) and the extensible membrane comprises an inflatable portion (84, 84') extending over all or part of the peripheral partition.

6. A citrus juicer (100) according to any one of claims 1 to 5, **characterized in that** it further includes fluid admission means (92) for admitting a fluid such as water in order to introduce said fluid into the cavity.

7. A citrus juicer (100) according to claim 6, **characterized in that** it further includes an ultrasound emitter device (94) configured to emit ultrasound into the fluid contained in the cavity so as to clean said cavity.

8. A citrus juicer (100) according to any one of claims 1 to 7, **characterized in that** the cannula presents a longitudinal axis (L), the citrus juicer further including rotation means (96) configured to cause the cannula to turn about its longitudinal axis.

9. A citrus juicer (100) according to any one of claims 1 to 8, **characterized in that** the first portion (52"') of the cannula (50"') has an outside surface (56‴), the cannula further including a projection (58', 58", 61"') extending on the outside surface of the first portion.

10. A citrus juicer (100) according any preceding claim, **characterized in that** the movable base comprises an annular tray (35) arranged to surround the cannula.

11. A citrus juicer according to any preceding claim, **characterized in that** it further includes a mover device for moving the lid (32) together with the movable base (33) of the ejector device in a direction parallel to the longitudinal axis of the cannula.

12. A citrus juicer according to claim 11, **characterized in that** the mover device is configured so that the movable base (33) is arranged at the bottom of the cavity when the lid is in the closed position, while the movable base is arranged at or above the opening (30) when the lid is in the open position.

13. A citrus juicer according to any preceding claim, **characterized in that** it further includes a discharge outlet (104) for discharging the pressed produce and a discharge device (106) for discharging the pressed produce (10') to the discharge outlet after it has been pressed and **in that** the discharge device (106) includes an arm (110) arranged to pivot between a first position and a second position.

14. A citrus juicer according to any preceding claim, **characterized in that** the cannula (50) extends axially outside the enclosure beyond the opening (30).

15. A citrus juicer according to any preceding claim, **characterized in that** the first portion (52) of the cannula presents a top end (52a) that is bullet-shaped, and **in that** when in the closed position, the top end (52a) of the cannula is engaged in a setback (32a) provided in the lid.

16. A citrus juicer according to claim 15, **characterized in that** the first portion (52) of the cannula comprises a body (52b) that extends between a base (52c) and the bullet-shaped top end (52a), the body being provided with orifices (37), and **in that** the body comprises a cylindrical cage (49) provided with a plurality of mutually spaced-apart axial rods (51), the rods extending over substantially the entire height of the cavity.

17. A citrus juicer according to any preceding claim, **characterized in that** the ejector device (31) presents a reception position for receiving produce for pressing introduced into the citrus juicer, at least a portion of the ejector device being located outside the cavity when the ejector device is in the reception position.
